# DEMANDE DE BREVET EUROPEEN

(11) **EP 2 887 472 A1**
(43) Date de publication de la demande: **24.06.2015**
(21) Numéro de dépôt: 14199248.7
(22) Date de dépôt: 19.12.2014
(51) Int. Cl.: H02B 1/56

(54) **Ensemble de panneaux amovibles pour armoire électrique, armoire électrique et procédé de remplacement d'un panneau amovible dans une telle armoire**

(30) Priorité: 20.12.2013 FR 1363244
(71) Demandeur: Schneider Electric Industries SAS, 92500 Rueil-Malmaison (FR)
(72) Inventeur: Lopez, Josep, 38050 GRENOBLE Cedex 09 (FR); Perrin, Alain, 38050 GRENOBLE Cedex 09 (FR)
(74) Mandataire: Myon, Gérard Jean-Pierre

(57) **Abrégé**

Dans cet ensemble (41) de panneaux amovibles (36a, 36b, 36c) pour une armoire électrique, chaque panneau comprend une paroi (46a, 46b, 46c) de fixation à un logement de l'armoire électrique et chaque paroi de fixation s'étend suivant un plan longitudinal (Pa, Pb, Pc) du panneau correspondant (36a, 36b, 36c). Les parois de fixation (46a, 46b, 46c) respectives des panneaux sont de même dimensions dans les plans longitudinaux (Pa, Pb, Pc) correspondants et au moins deux des panneaux amovibles (36a, 36b, 36c) sont différents, en ce que les au moins deux panneaux (36a, 36b) comprennent des systèmes de dissipation thermique respectifs (50, 52) ayant des dimensions respectives, dans les plans longitudinaux correspondants (Pa, Pb), différentes.

## Description

La présente invention concerne un ensemble de panneaux amovibles pour une armoire électrique, une armoire électrique comprenant un ou des panneaux appartenant à un tel ensemble et un procédé de remplacement d'un ou de tels panneaux amovibles dans une telle armoire électrique.

Les armoires électriques de contrôle de machines intègrent des équipements électriques qui dissipent des calories et produisent de la chaleur. Ainsi, un enjeu persistant dans le domaine des armoires électriques ou de contrôle est de limiter la température à l'intérieur de ces armoires, c'est-à-dire d'évacuer les calories, pour assurer le bon fonctionnement des équipements qu'elles contiennent. Pour cela, il est nécessaire de dimensionner thermiquement l'armoire électrique en insérant un ou des systèmes de dissipation thermique au niveau de celle-ci. Les systèmes de dissipation thermique sont, par exemple, des climatiseurs, des échangeurs, des ventilateurs ou de simples aérations.

Il est ainsi connu, dans le domaine des armoires électriques et plus précisément de la gestion de leur température, de réaliser, sur une face de chaque armoire électrique, une découpe spécifique au système de dissipation thermique à installer. Ainsi, pour chaque système de dissipation thermique offrant une puissance de sortie différente ou ayant des dimensions différentes, une découpe spécifique est réalisée au niveau de l'armoire électrique et le système de dissipation thermique correspondant est installé dans la découpe et fixé à l'armoire électrique. Dans de telles armoires électriques, lorsqu'un opérateur souhaite augmenter la puissance du système de dissipation thermique utilisé et ainsi installer un nouveau système de dissipation thermique, l'opération de changement de système de dissipation thermique est longue, complexe et coûteuse. En outre, dans des environnements industriels où l'espace disponible autour des armoires électriques est réduit, un tel changement est d'autant plus complexe.

Le but de l'invention est donc de proposer une armoire électrique pour laquelle l'installation d'un système de dissipation thermique et la modification du système de dissipation thermique utilisé sont simplifiées, plus rapides et moins coûteuses.

A cet effet, l'invention a pour objet un ensemble de panneaux amovibles pour une armoire électrique, chaque panneau comprenant une paroi de fixation à un logement de l'armoire électrique et chaque paroi de fixation s'étendant suivant un plan longitudinal du panneau correspondant. Conformément à l'invention, les parois de fixation respectives des panneaux sont de mêmes dimensions dans les plans longitudinaux correspondants et au moins deux des panneaux amovibles sont différents en ce que soit les au moins deux panneaux amovibles comprennent des systèmes de dissipation thermique respectifs ayant des dimensions respectives, dans les plans longitudinaux correspondants différentes, soit l'un des au moins deux panneaux amovibles comprend un système de dissipation thermique tandis que l'autre des au moins deux panneaux amovibles est démuni de système de dissipation thermique.

Grâce à l'invention, les panneaux amovibles permettent de modifier l'armoire électrique et plus précisément, le système de dissipation thermique qui lui est associé, de façon simplifiée. En effet, les panneaux amovibles comprennent des parois de fixation de mêmes dimensions et sont simples à retirer ou à fixer. Lorsqu'un opérateur souhaite utiliser dans une armoire électrique aucun système de dissipation thermique ou différents systèmes de dissipation thermique, il lui suffit d'insérer au niveau d'une des faces de l'armoire électrique le panneau amovible correspondant. A partir d'un même logement formé sur une face de l'armoire électrique, un opérateur est propre à associer à l'armoire électrique des systèmes de dissipation thermique de dimensions différentes.

Selon des aspects avantageux de l'invention, l'ensemble comprend en outre une ou plusieurs des caractéristiques suivantes, prises isolément ou selon toutes les combinaisons techniquement admissibles :
- Au moins deux des systèmes de dissipation thermique sont propres à délivrer des puissances thermiques de sortie respectives qui sont différentes.
- Il comprend au moins trois panneaux amovibles, alors qu'au moins deux des panneaux amovibles comprennent des systèmes de dissipation thermique de dimensions différentes, dans les plans longitudinaux correspondants.
- Le ou les systèmes de dissipation thermique sont choisis parmi le groupe consistant en : un système d'aération, un système de ventilation, un échangeur air-air, un échangeur air-eau, un climatiseur avec ou sans filtre.
- Chaque paroi de fixation comprend sur son contour un joint d'étanchéité alors que chaque paroi de fixation comprend un ou des matériaux thermiquement isolants ou conducteurs.
- Chaque paroi de fixation comprend des moyens de fixation au logement de l'armoire électrique.

L'invention a également pour objet une armoire électrique, comprenant au moins un logement de réception d'un panneau amovible et un panneau amovible fixé à le ou chaque logement. Conformément à l'invention, le ou les panneaux amovibles appartiennent à un ensemble conforme à l'une des revendications 1 à 6.

Avantageusement, chaque paroi de fixation a, dans le plan longitudinal correspondant, les mêmes dimensions que le logement auquel elle est fixée.

L'invention a également pour objet un procédé de remplacement d'un premier panneau amovible d'une armoire électrique, le premier panneau comprenant une première paroi de fixation à un logement de l'armoire électrique, la paroi de fixation s'étendant suivant un premier plan longitudinal du premier panneau, le procédé comprenant les étapes suivantes :
- b) la détermination d'un système de dissipation thermique adapté à l'armoire,
- c) le démontage du premier panneau amovible afin de libérer le logement, Conformément à l'invention, le procédé comprend l'étape suivante :
- d) la fixation d'un deuxième panneau amovible au logement, le deuxième panneau comprenant le système de dissipation thermique déterminé lors de l'étape de détermination et une deuxième paroi de fixation s'étendant suivant un deuxième plan longitudinal, les première et deuxième parois de fixation étant de mêmes dimensions, dans les premier respectivement deuxième plan longitudinaux et les premier et deuxième panneaux amovibles étant différents, en ce que soit ils comprennent des systèmes de dissipation thermique respectifs ayant des dimensions respectives, dans les plans longitudinaux correspondants, différentes, soit l'un des panneaux comprend un système de dissipation thermique tandis que l'autre des panneaux est démuni de système de dissipation thermique.

Selon d'autres aspects avantageux de l'invention, le procédé comprend en outre une ou plusieurs des étapes suivantes, prises isolément ou suivant toutes les combinaisons techniquement admissibles :
- Précédemment à l'étape de détermination b), le procédé comprend les étapes suivantes :
   - a1) la sauvegarde d'une température de consigne désirée à l'intérieur de l'armoire électrique,
   - a2) la mesure de la température à l'extérieur de l'armoire électrique, à une distance comprise entre 1cm et 3 mètres de l'intérieur de l'armoire électrique,
   - a3) le calcul de la différence de température entre la température extérieure et la température de consigne,
   - a4) la sauvegarde de chaque valeur de différence de température calculée,
   alors que lors de l'étape de détermination b) le système de dissipation thermique adapté à l'armoire électrique est déterminé en fonction des valeurs de différence de température sauvegardées.
- Suite à l'étape de sauvegarde a1) et précédemment à l'étape de détermination b), le procédé comprend les étapes suivantes :
   - a5) la mesure de la température à l'intérieur de l'armoire électrique,
   - a6) le calcul de la différence de température entre la température intérieure et la température de consigne,
   alors qu'au cours de l'étape de détermination b) un signal d'alarme est transmis vers un opérateur si la différence de température calculée au cours de l'étape de calcul a6) est supérieure à un seuil de température.

L'invention sera mieux comprise et d'autres avantages de celle-ci apparaitront plus clairement à la lumière de la description qui va suivre, donnée uniquement à titre d'exemple non limitatif, et faite en se référant aux dessins annexés sur lesquels :
- la figure 1 est une vue en perspective d'une armoire électrique conforme à l'invention comprenant un logement de réception d'un panneau amovible sur une de ses faces ;
- la figure 2 est une représentation schématique et fonctionnelle de l'armoire électrique de la figure 1, qui comprend un premier panneau amovible muni d'un premier système de dissipation thermique fixé à son logement ;
- la figure 3 est une vue en élévation de l'armoire électrique de la figure 2 ;
- la figure 4 est une vue en élévation de l'armoire électrique de la figure 1, qui comprend un deuxième panneau amovible muni d'un deuxième système de dissipation thermique, différent du premier système de dissipation thermique, fixé à son logement ;
- la figure 5 est une vue en élévation d'un ensemble de trois panneaux amovibles conforme à l'invention et comprenant le premier et le deuxième panneaux amovibles des figures 2 et 4 ; et
- la figure 6 est un organigramme d'un procédé de remplacement d'un panneau amovible d'une armoire électrique conforme à l'invention.

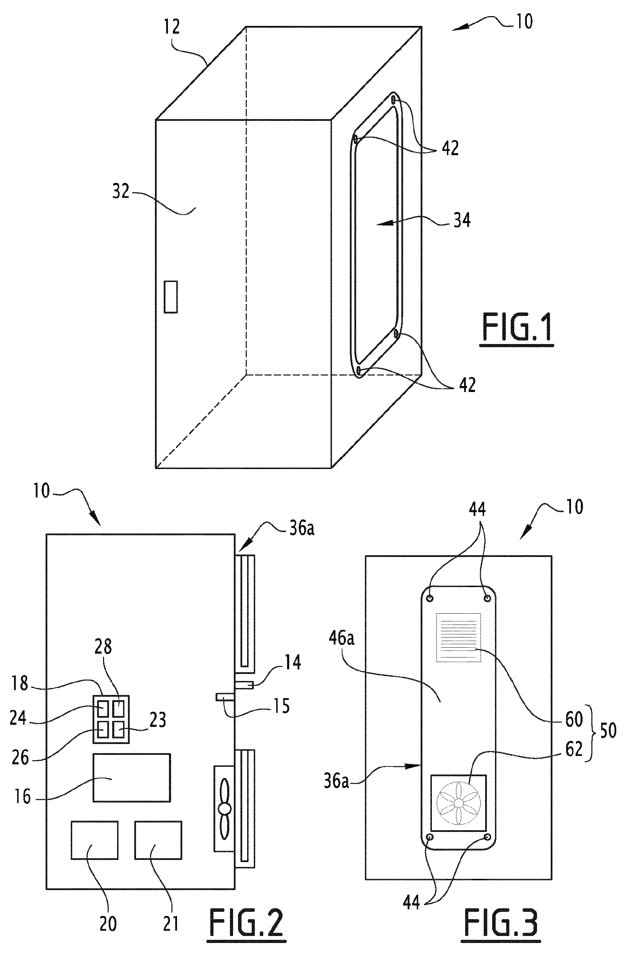

L'armoire électrique 10, représentée sur la figure 1, comprend une enveloppe 12 parallélépipédique et des équipements électriques, non représentés, propres à piloter une installation électrique, non représentée, à laquelle l'armoire électrique 10 est connectée. L'armoire électrique 10 comporte également, comme représenté à la figure 2, un capteur de température extérieure 14, un capteur de température intérieure 15, une unité de traitement 16 associée à une mémoire 18, un organe de visualisation 20 et un boîtier 21 d'alimentation électrique.

Le capteur de température extérieure 14 est propre à mesurer la température à l'extérieure de l'armoire électrique 10, c'est-à-dire en dehors de l'enveloppe 12. Ainsi, le capteur de température extérieure 14 est positionné à une distance comprise entre 1 cm et 3 mètres de l'intérieur de l'armoire électrique 10.

Le capteur de température intérieure 15 est propre à mesurer la température à l'intérieure de l'armoire électrique 10, c'est-à-dire à l'intérieure de l'enveloppe 12.

L'unité de traitement 16 est propre à récupérer les données mesurées par les capteurs de température extérieure 14 et intérieure 15. L'unité de traitement 16 est également apte à exécuter des logiciels compris dans la mémoire 18.

La mémoire 18 comprend un logiciel 23 de mémorisation d'une température de consigne, désirée à l'intérieur de l'armoire électrique 10, un logiciel 24 de calcul de différences de température, un logiciel 26 de mémorisation des valeurs de différences de températures calculées par le logiciel de calcul 24 et un logiciel 28 de détermination d'un système de dissipation thermique adapté à l'armoire électrique 10.

L'organe de visualisation 20 est, par exemple, apte à afficher les valeurs de différence de température calculées par le logiciel de calcul 24 et/ou des caractéristiques du système de dissipation thermique déterminé par le logiciel de détermination 28.

Le logiciel de calcul 24 est propre à calculer, d'une part, la différence de température, à un instant donné, entre la température extérieure mesurée par le capteur de température extérieure 14 et la température de consigne et d'autre part, la différence de température, à un instant donné, entre la température intérieure mesurée par le capteur de température intérieure 15 et la température de consigne.

Le logiciel de détermination 28 est propre à transmettre un signal d'alarme, par exemple vers l'organe de visualisation 20, si la température intérieure mesurée est supérieure à la température de consigne. Plus généralement, le signal d'alarme est propre à être transmis si les valeurs de la différence entre la température intérieure mesurée et la température de consigne, sont supérieures à un seuil de température, par exemple égal 2°C.

Le logiciel de détermination 28 est propre à déterminer le système de dissipation thermique adapté à l'armoire électrique 10, en fonction des valeurs de différence de température, entre la température extérieure et la température de consigne, mémorisées par le logiciel de mémorisation 26.

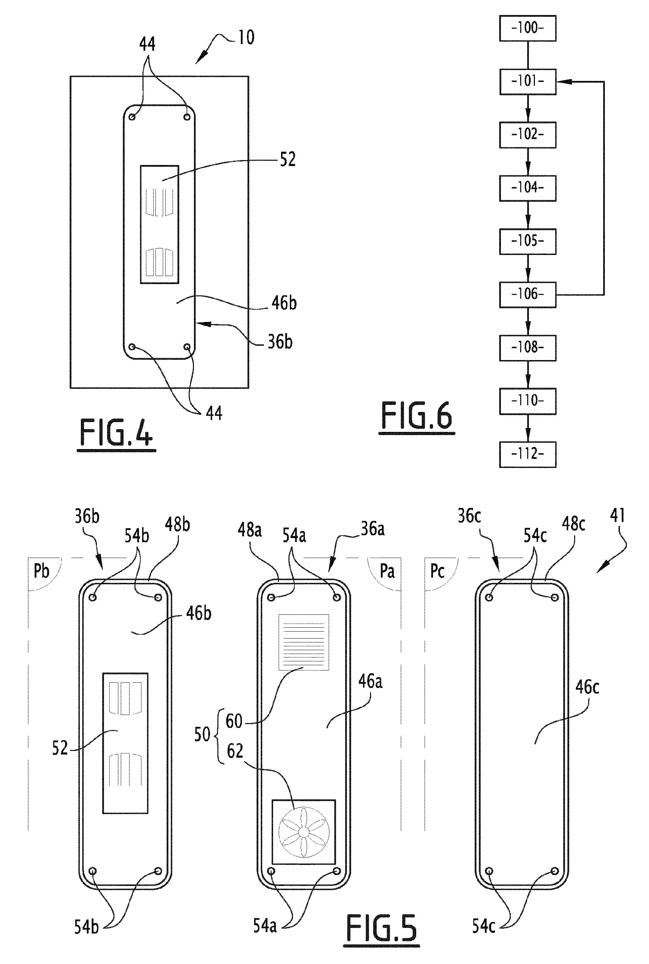

L'une des faces de l'armoire électrique 10 comprend une porte 32 d'accès à l'armoire électrique 10, tandis qu'une autre face comprend un logement 34 de réception sélective de premier 36a, deuxième 36b, troisième 36c panneaux amovibles qui appartiennent à un ensemble 41 de panneaux amovibles représenté à la figure 4.

Sur la figure 1, le logement 34 est libre et aucun des panneaux amovibles 36a, 36b et 36c n'est fixé sur celui-ci. Le logement 34 comprend quatre orifices 42 de réception de moyens 44, tels que des vis, de fixation sélective des panneaux 36a, 36b, 36c à l'armoire électrique 10.

Sur les figures 2 et 3, le premier panneau amovible 36a est fixé au logement 34, tandis que sur la figure 4, le deuxième panneau amovible 36b est fixé au logement 34.

Le panneau amovible 36a comprend une première paroi 46a de fixation au logement 34. Cette paroi est constituée de matériaux thermiquement isolants ou conducteurs, adaptés aux conditions d'environnement dans lequel est positionnée l'armoire 10. Ainsi, la paroi 46a est, par exemple, constituée de matériaux thermiquement isolants pour éviter des phénomènes de condensation dans l'armoire électrique 10 ou de matériaux thermiquement conducteurs pour améliorer la dissipation thermique. De même, les deuxième 36b et troisième 36c panneaux comprennent respectivement une deuxième 46b et une troisième 46c parois de fixation au logement 34.

Chaque paroi de fixation 46a, 46b, 46c comprend quatre orifices 54a, 54b, 54c propres à être alignés avec les orifices 42 lors de la fixation du panneau amovible correspondant 36a, 36b, 36c. Chaque paroi de fixation 46a, 46b, 46c est propre à recouvrir entièrement le logement 34 lorsqu'elle est fixée à celui-ci.

La première paroi de fixation 46a s'étend suivant un premier plan longitudinal Pa du premier panneau amovible 36a, et a, dans le premier plan longitudinal Pa, des dimensions globalement identiques à celles du logement 34, lorsqu'elle est fixée à celui-ci.

Les deuxième 46b et troisième 46c parois de fixation s'étendent respectivement suivant des deuxième et troisième plans longitudinaux Pb, Pc, du panneau amovible correspondant 36b, 36c. De même, les deuxième 46b et troisième 46c parois de fixation ont dans respectivement les deuxième Pb et troisième Pc plans longitudinaux, des dimensions globalement identiques à celles du logement 34, lorsqu'elles sont sélectivement fixées à celui-ci.

Les parois de fixation 46a, 46b, 46c ont les mêmes dimensions et la même forme, dans les plans longitudinaux correspondants Pa, Pb, Pc. En complément, les parois de fixation 46a, 46b, 46c ont les mêmes dimensions suivant une direction respective perpendiculaire au plan longitudinal correspondant Pa, Pb, Pc.

Chaque panneau 36a, 36b, 36c comprend un joint d'étanchéité respectif 48a, 48b, 48c positionné sur le contour de la paroi de fixation correspondante 46a, 46b, 46c. Les joints d'étanchéités 48a, 48b, 48c permettent d'assurer une étanchéité entre l'intérieur et l'extérieur de l'armoire électrique 10. Plus précisément, lors de la fixation sélective de chaque paroi de fixation 46a, 46b, 46c au logement 34, les premiers orifices 42 sont alignés avec les deuxièmes orifices correspondants 54a, 54b, 54c et les moyens de fixation 44 sont insérés à travers ces orifices et vissés afin d'écraser les joints d'étanchéités correspondants 34a, 34b, 34c, qui assurent ainsi une bonne étanchéité entre l'intérieur et l'extérieur de l'armoire électrique 10.

Les panneaux amovibles 36a, 36b comprennent un premier 50 respectivement un deuxième 52 système de dissipation thermique.

Le panneau 36c est démuni de système de dissipation thermique et comprend uniquement la paroi de fixation 46c.

Les premier 50 et deuxième 52 systèmes de dissipation thermique sont différents et correspondent respectivement à un système de ventilation 50 et à un climatiseur 52. Le système de ventilation 50 comprend un ventilateur 60 et une bouche d'aération 62.

Les dimensions des systèmes de dissipation thermique 50, 52 dans les plans longitudinaux Pa, Pb correspondants sont différentes. Les systèmes de dissipation thermique 50, 52 délivrent également des puissances thermiques de sortie différentes et ne sont pas adaptés pour le même type d'application. Ainsi, le deuxième système de dissipation thermique 52 délivre une puissance thermique de sortie beaucoup plus importante que le premier système de dissipation thermique 50 et est propre à refroidir beaucoup plus rapidement l'intérieur de l'armoire électrique 10 que le premier système de dissipation thermique 50.

Avantageusement, les panneaux amovibles 36a, 36b, 36c portent les capteurs de température extérieure 14 et intérieure 15 et sont propres à transmettre les valeurs mesurées vers l'unité de traitement 16 et la mémoire 18. Avantageusement encore, les panneaux amovibles 36a, 36b, 36c portent l'unité de traitement 16, la mémoire 18, et l'organe de visualisation 20.

L'ensemble 41 de panneaux amovibles représenté à la figure 5 n'est pas limitatif de l'invention. Ainsi l'ensemble de panneaux amovibles comprend au moins deux panneaux amovibles différents qui comprennent soit des systèmes de dissipation thermique de dimensions différentes, dans les plans longitudinaux correspondants, soit, pour un panneau, un système de dissipation thermique, tandis que l'autre panneau est démuni de système de dissipation thermique.

Le nombre de panneaux amovibles n'est pas limitatif pour l'ensemble de panneaux amovibles 41 et tous les panneaux amovibles comprennent des parois de fixation 46a, 46b, 46c de mêmes dimensions dans les plans longitudinaux correspondants. Les panneaux amovibles sont pour certains démunis de systèmes de dissipation thermique tandis que d'autres comprennent un système de dissipation thermique choisi parmi le groupe consistant en : un système d'aération, un système de ventilation, un échangeur air-air, un échangeur air-eau et un climatiseur avec ou sans filtre.

A la figure 6, un organigramme d'un procédé de remplacement d'un panneau amovible de l'armoire électrique 10 est représenté. Dans cet exemple, l'organigramme correspond au remplacement du premier panneau amovible 36a, fixé à l'armoire électrique 10 sur la figure 3, par le deuxième panneau amovible 36b, fixé à l'armoire électrique 10 sur la figure 4.

Lors d'une première étape 100, le logiciel de mémorisation 23 mémorise la température de consigne. La température de consigne est, par exemple, transmise par un opérateur, via l'organe de visualisation 20 correspondant également à un organe de saisie de données, à l'unité de traitement 16 et à la mémoire 18. Lors d'une étape 101, le capteur de température intérieure 15 mesure la température à l'intérieur de l'armoire électrique 10 à un instant donné.

Puis, lors d'une étape 102 suivante, le capteur de température extérieure 14 mesure la température à l'extérieure de l'armoire électrique 14, globalement au même instant que la mesure réalisée à l'étape 101.

Ensuite, au cours d'une étape 104, le logiciel de calcul 24 calcule la différence de température entre la température extérieure mesurée à l'étape 102 et la température de consigne. Puis, lors d'une étape 105, le logiciel de calcul 24 calcule la différence de température entre la température intérieure mesurée à l'étape 101 et la température de consigne. Ensuite, lors d'une étape 106, le logiciel de mémorisation 26 sauvegarde chaque valeur de différence de température calculée. Plus précisément, pendant une durée prédéterminée et à des intervalles de temps prédéterminés, les étapes 101, 102, 104, 105 et 106 sont répétées successivement afin d'obtenir et de sauvegarder un nombre prédéterminé de valeurs de différence de température pendant la durée prédéterminée.

Ensuite, lorsque la durée prédéterminée est écoulée, au cours d'une étape 108, le logiciel de détermination 28 détermine le nom ou les caractéristiques du système de dissipation thermique adapté à l'armoire électrique 10, en fonction des valeurs de différence de température, entre la température extérieure et la température de consigne, sauvegardées à l'étape 106. Le logiciel de détermination 28 détermine, dans cet exemple, que le système de dissipation thermique adapté à l'armoire électrique 10 est celui associé au deuxième panneau amovible 36b. En outre, au cours de l'étape 108, le logiciel de détermination transmet à l'opérateur le signal d'alarme si les valeurs de différence de température entre la température intérieure et la température de consigne sont supérieures au seuil de température. Le signal d'alarme permet d'indiquer à l'opérateur la présence d'un défaut de la température à l'intérieur de l'armoire 10.

Puis, lors d'une étape 110, un opérateur démonte le premier panneau amovible 36a afin de libérer le logement 34. Ensuite, au cours d'une étape 112, le deuxième panneau amovible 36b est fixé au logement 34 via les vis 44.

Le fait que chaque panneau amovible 36a, 36b, 36c comprenne une paroi de fixation 46a, 46b, 46c de même dimension, dans les plans longitudinaux Pa, Pb, Pc correspondants, permet de simplifier le remplacement d'un panneau amovible par un autre, et notamment le remplacement d'un système de dissipation thermique par un autre système de dissipation thermique. En effet, pour insérer un nouveau système de dissipation thermique au niveau d'une armoire électrique comprenant un ancien système de dissipation thermique, il n'est plus nécessaire, tel que dans l'état de la technique présenté précédemment, d'adapter les dimensions d'un logement de réception de l'ancien système de dissipation thermique, formé sur une face de l'armoire électrique, aux dimensions du nouveau système de dissipation thermique.

En outre, puisque les parois de fixation 46a, 46b, 46c ont globalement les mêmes dimensions que le logement 34, notamment dans les plans longitudinaux Pa, Pb, Pc, ceci permet d'avoir un logement 34 entièrement recouvert par la paroi de fixation 46a, 46b, 46c correspondante et ainsi garantir, notamment grâce au joint 48a, 48b, 48c, une bonne étanchéité entre l'intérieur et l'extérieur de l'armoire 10. Cette étanchéité permet d'optimiser le refroidissement produit par le système de dissipation thermique et d'éviter l'intrusion de poussière dans l'armoire électrique 10.

A partir d'un même logement 34, c'est-à-dire d'une découpe générique sur chaque armoire électrique 10, un opérateur est apte à venir installer n'importe quel système de dissipation thermique associé à l'un des panneaux amovibles, dans chaque armoire électrique 10. Les panneaux amovibles permettent de fournir une compatibilité dimensionnelle entre différentes solutions thermiques pour l'armoire électrique, c'est-à-dire entre les différents systèmes de dissipation thermique. L'armoire électrique 10 est donc modulable et plus précisément, sa configuration thermique est modulable.

Avantageusement, l'armoire électrique 10 comprend plusieurs logements 34 auxquels sont fixés des panneaux amovibles similaires au troisième panneau amovible 36c et un opérateur est propre à retirer l'un des troisièmes panneaux amovibles 36c pour fixer à l'armoire 10, sur l'une des faces de l'armoire 10 qui lui convient le mieux en termes d'encombrement et d'espace disponible, l'un des panneaux amovibles 36a, 36b comprenant un système de dissipation thermique, tel que le premier 36a ou le deuxième 36b panneaux amovibles. En cas de changement de l'organisation de l'espace dans lequel se trouve l'armoire électrique 10, un opérateur est ainsi apte à modifier l'emplacement du système de dissipation thermique, c'est-à-dire du panneau amovible comprenant le système de dissipation thermique de manière simple et rapide.

Le fait de mesurer la température à l'intérieur et à l'extérieur de l'armoire électrique 10 permet de contrôler en permanence le bon fonctionnement et le bon dimensionnement du système de dissipation thermique associé à l'armoire électrique 10. Ceci permet, par exemple, de transmettre un signal d'alarme à un opérateur, via, par exemple, l'organe de visualisation 20, lorsqu'une différence de température supérieure à un seuil prédéterminé est détectée. Le système de dissipation électrique associé à l'armoire 10 peut être modifié à tout moment de façon simple et rapide lorsque les capteurs de température détectent une différence de température, entre l'intérieur et l'extérieur de l'armoire électrique 10, supérieure au seuil prédéterminé. Ainsi, notamment dans le cas où la composition de l'armoire électrique est modifiée par un opérateur, c'est-à-dire lorsque les équipements électriques compris dans l'armoire électrique 10 sont changés ou alors que des équipements électriques sont ajoutés, il est possible de déterminer s'il est nécessaire ou non de changer le système de dissipation thermique, ainsi que de déterminer quelle système de dissipation thermique est nécessaire et d'installer ce système de dissipation thermique de façon simple et rapide.

Avantageusement, chaque système de dissipation thermique est propre à être connecté via un connecteur universel, non représenté, identique quelque soit le système de dissipation thermique, au boîtier d'alimentation 21 et au capteur de température intérieur 15. De même l'unité de traitement 18 et la mémoire 16 sont propres à être connectées au boîtier d'alimentation 21 et au capteur de température intérieure 15 via le connecteur universel.

Avantageusement, les capteurs de température extérieure 14 et intérieure 15 sont positionnés sur le tiers supérieur de l'armoire électrique 10.

Avantageusement, le logement 34 comprend, par exemple, deux glissières, non représentées, propres à porter le panneau amovible 36a, 36b, 36c fixé au logement 34.

Avantageusement, les parois de fixation 46a, 46b, 46c comprennent une lèvre de clipsage, non représentée, qui permet d'améliorer la fixation de la paroi de fixation 46a, 46b, 46c au logement 34, par complémentarité de formes.

Selon une autre variante, les capteurs de température intérieure 14 et extérieure 15 sont associés à un organe de communication et à une antenne radioélectrique, non représentés, qui sont propres à transmettre les valeurs de température mesurées à un concentrateur de données, non représenté. Dans cette variante, le concentrateur de données comprend l'unité de traitement 16, la mémoire 18 et l'organe de visualisation 20.

Selon une autre variante, les moyens de calcul 24, les moyens de mémorisation 26 et les moyens de détermination 28 sont réalisés sous forme de composants logiques programmables ou encore sous forme de circuits intégrés dédiés.

Selon une autre variante, l'armoire électrique comprend plusieurs colonnes électriques et l'unité de traitement 16, la mémoire 18 et l'organe de visualisation 20 sont mutualisés, c'est-à-dire communs pour chaque colonne.

Les différentes variantes décrites ci-dessus peuvent être combinées entre elles totalement ou partiellement, pour donner lieu à d'autres modes de réalisation de l'invention.

## Revendications

1. Ensemble (41) de panneaux amovibles (36a, 36b, 36c) pour une armoire électrique (10), chaque panneau comprenant une paroi (46a, 46b, 46c) de fixation à un logement (34) de l'armoire électrique et chaque paroi de fixation s'étendant suivant un plan longitudinal (Pa, Pb, Pc) du panneau correspondant (36a, 36b, 36c), **caractérisé en ce que** les parois de fixation respectives (46a, 46b, 46c) des panneaux sont de mêmes dimensions dans les plans longitudinaux correspondants (Pa, Pb, Pc) et au moins deux des panneaux amovibles (36a, 36b, 36c) sont différents **en ce que** les au moins deux panneaux amovibles (36a, 36b) comprennent des systèmes de dissipation thermique respectifs (50, 52) ayant des dimensions respectives, dans les plans longitudinaux (Pa, Pb) correspondants, différentes.

2. Ensemble selon la revendication 1, **caractérisé en ce qu'**au moins deux des systèmes de dissipation thermique (50, 52) sont propres à délivrer des puissances thermiques de sortie respectives qui sont différentes.

3. Ensemble selon la revendication 1 ou 2, **caractérisé en ce qu'**il comprend au moins trois panneaux amovibles (36a, 36b, 36c), et **en ce qu'**au moins deux des panneaux amovibles (36a, 36b) comprennent des systèmes de dissipation thermique (50, 52) de dimensions différentes, dans les plans longitudinaux (Pa, Pb) correspondants.

4. Ensemble selon l'une des revendications précédentes, **caractérisé en ce que** le ou les systèmes de dissipation thermique (50, 52) sont choisis parmi le groupe consistant en : un système d'aération, un système de ventilation, un échangeur air-air, un échangeur air-eau, un climatiseur avec ou sans filtre.

5. Ensemble selon l'une des revendications précédentes, **caractérisé en ce que** chaque paroi de fixation (46a, 46b, 46c) comprend sur son contour un joint d'étanchéité (48a, 48b, 48c) et **en ce que** chaque paroi de fixation comprend un ou des matériaux thermiquement isolants ou conducteurs.

6. Ensemble selon l'une des revendications précédentes, **caractérisé en ce que** chaque paroi de fixation (46a, 46b, 46c) comprend des moyens (54a, 54b, 54c) de fixation au logement (34) de l'armoire électrique (10).

7. Armoire électrique (10), comprenant au moins un logement (34) de réception d'un panneau amovible (36a, 36b, 36c) et un panneau amovible (36a, 36b, 36c) fixé à le ou chaque logement (34), **caractérisée en ce que** le ou les panneaux amovibles (36a, 36b, 36c) appartiennent à un ensemble conforme à l'une des revendications 1 à 6.

8. Armoire électrique selon la revendication 7, **caractérisée en ce que** chaque paroi de fixation (46a, 46b, 46c) a, dans le plan longitudinal correspondant (Pa, Pb, Pc), les mêmes dimensions que le logement (34) auquel elle est fixée.

9. Procédé de remplacement d'un premier panneau amovible (36a) d'une armoire électrique (10), le premier panneau (36a) comprenant une première paroi de fixation (46a) à un logement (34) de l'armoire électrique, la paroi de fixation (46a) s'étendant suivant un premier plan longitudinal (Pa) du premier panneau (36a), le procédé comprenant les étapes suivantes :
- b) la détermination (108) d'un système de dissipation thermique adapté à l'armoire,
- c) le démontage (110) du premier panneau amovible (36a) afin de libérer le logement (34),
**caractérisé en ce que** le procédé comprend l'étape suivante :
- d) la fixation (112) d'un deuxième panneau amovible (36b) au logement (34), le deuxième panneau (36b) comprenant le système de dissipation thermique (52) déterminé lors de l'étape b) de détermination (110) et une deuxième paroi de fixation (46b) s'étendant suivant un deuxième plan longitudinal (Pb), les première (46a) et deuxième (46b) parois de fixation étant de mêmes dimensions dans les premier (Pa) respectivement deuxième (Pb) plan longitudinaux et les premier (36a) et deuxième (36b) panneaux amovibles étant différents **en ce qu'**ils comprennent des systèmes de dissipation thermique respectifs (50, 52) ayant des dimensions respectives, dans les plans longitudinaux correspondants (Pa, Pb), différentes.

10. Procédé selon la revendication 9, **caractérisé en ce que** précédemment à l'étape (108) de détermination b), le procédé comprend les étapes suivantes :
- a1) la sauvegarde (100) d'une température de consigne désirée à l'intérieur de l'armoire électrique (10),
- a2) la mesure (102) de la température à l'extérieur de l'armoire électrique (10), à une distance comprise entre 1cm et 3 mètres de l'intérieur de l'armoire électrique,
- a3) le calcul (104) de la différence de température entre la température extérieure et la température de consigne,
- a4) la sauvegarde (106) de chaque valeur de différence de température calculée,
et **en ce que** lors de l'étape de détermination b) le système de dissipation thermique (50, 52) adapté à l'armoire électrique (10) est déterminé en fonction des valeurs de différence de température sauvegardées.

11. Procédé selon la revendication 10, **caractérisé en ce que** suite à l'étape de sauvegarde a1) et précédemment à l'étape de détermination b), le procédé comprend les étapes suivantes :
- a5) la mesure (101) de la température à l'intérieur de l'armoire électrique (10),
- a6) le calcul (105) de la différence de température entre la température intérieure et la température de consigne,
et **en ce qu'**au cours de l'étape de détermination b) un signal d'alarme est transmis vers un opérateur si la différence de température calculée au cours de l'étape de calcul a6) (105) est supérieure à un seuil de température.
